# EUROPEAN PATENT APPLICATION

(11) **EP 2 511 240 A1**
(43) Date of publication of application: **17.10.2012**
(21) Application number: 11162642.0
(22) Date of filing: 15.04.2011
(51) Int. Cl.: C02F 1/32, C02F 1/00

(54) **Method and apparatus for disinfection of water**

(71) Applicant: SIEMENS AKTIENGESELLSCHAFT, 80333 München (DE)
(72) Inventor: Sichel, Cosima, 89077, Ulm (DE)

(57) **Abstract**

The invention relates to a method for disinfection of water, having the steps of: exposing an amount of water to be treated to ultraviolet radiation characterized by a given UV irradiance and introducing hydrogen peroxide into the amount of water to be treated, characterized in that the amount of water is disinfected by applying a UV radiation dose lower than 400 J/m², in particular lower than 350 J/m². The invention further relates to an apparatus (2) for disinfection of water comprising:
- a reactor chamber (6) for an amount of water to be treated,
- a feed line (4) for water, said feed line (4) having a inflow end (10) connected to the reactor chamber (6),
- an UV source (18) emitting ultraviolet radiation characterized by a given UV irradiance,
- a dosage device (16) for introducing hydrogen peroxide into the amount of water, and
- a control system (20) controlling the UV dose so as to keep it lower than 400 J/m², in particular lower than 350 J/m².

## Description

The present application relates to a method for disinfection of water in a reactor chamber, having the steps of exposing an amount of water to be treated to a UV source characterized by a given UV irradiance and introducing hydrogen peroxide into the amount of water to be treated. The present application further relates to an apparatus for disinfection of water.

In order to minimize the risk of infectious diseases, it is customary to disinfect water meant for human use. An important field for water disinfection is for example agriculture. Worldwide 70% of human-used water is used for agricultural purposes. Disinfection of water for agricultural production reduces the spread of pathogenic germs especially when water is used for drip irrigation.

There is a large number of different techniques for water disinfection. Chemicals like chlorine, ozone, and other oxidants are used for chemical disinfection. During mechanical disinfection microorganisms are separated by means of filtration, e.g. ultrafiltration. Killing of microorganisms by means of ultraviolet (UV) lamps is counted among the physical methods of waste water treatment. Mostly the ultraviolet emission of mercury vapour arc lamps is used for disinfection, in doing so DNA of the germs contained in the contaminated water is destroyed by direct UV-C absorption (wavelength shorter than 290nm). For disinfection of relevant pathogen microorganisms a minimum dose of 400J/m² has proven to be effective. Therefore, a minimum microbiocidal UV dose of 400J/m² is demanded in most drinking water standards.

Combinations of some of the above-mentioned techniques are also known and used to treat contaminated water. One such example is the so called advanced oxidation process (AOP). In an advanced oxidation process the photolytic fission of hydrogen peroxide (H₂O₂) to OH radicals and the subsequent oxidation processes are used to eliminate organic substances in water. When hydrogen peroxide absorbs UV radiation of short wavelengths (254nm or shorter) it is photolyzed in highly-reactive OH radicals that oxidize many organic compounds. Usually an elongated tubular mercury vapour arc lamp is used as UV source in conventional AOP systems. In order to make use of all the radiation emitted by the lamps, typically the lamps are enclosed for protection in immersion wells made of quartz, a material that transmits UV light with minimal absorption, and immersed in a reactor chamber with the water to be treated. Yet, this approach requires very high UV dose, in particular higher than 400 J/cm².

A UV-disinfection system in which hydrogen peroxide is used as an oxidant is described in Canadian patent application CA 2,300,775 A1. The UV-oxidation and UV-disinfection system uses microwave-excited electrodes lamp as a source of ultraviolet radiation combined with a coaxial flow-through reactor. In the coaxial flow-through reactor a liquid containing contaminants is pumped from the bottom of a reactor vessel and flows vertically upwards through the reactor vessel. The UV source is mounted above the reactor vessel such that the UV radiation is directed downward through the reactor vessel. A hydrogen peroxide solution is injected into the liquid being treated and mixed by an inline mixer just before the liquid enters the reactor vessel. The efficiency of the system is achieved due to the particular design of the reactor, since the treated liquid is radiated during its entire passage through the reactor vessel.

It is an object of the present invention to combine UV radiation with hydrogen peroxide in such a way that contaminated water is disinfected efficiently.

The object of the invention is achieved by a method for disinfection of water in a reactor chamber, having the steps of exposing an amount of water to be treated to a UV source characterized by a given UV irradiance and introducing hydrogen peroxide into the amount of water to be treated, wherein the amount of water is disinfected by applying a UV radiation dose lower than 400 J/m², in particular lower than 350 J/m². Due to the synergetic effect the UV dose used in the apparatus for disinfection of water is kept lower than the state of the art of 400 J/m², in particular lower than 350 J/m², but maintaining the same disinfection efficiency.

The above object is also achieved by an apparatus for disinfection of water comprising:
- a reactor chamber for an amount of water to be treated,
- a feed line for water, said feed line having a inflow end connected to the reactor chamber,
- an UV source emitting ultraviolet radiation characterized by a given UV irradiance,
- a dosage device for introducing hydrogen peroxide into the amount of water, and
- a control system controlling the UV dose in the reactor chamber so as to keep it lower than 400 J/m², in particular lower than 350 J/m².

According to the invention the synergetic effect between UV radiation and hydrogen peroxide is used to minimise the UV dose necessary for disinfection of water. This synergetic effect is described in the article "Lethal synergy of solar UV-radiation and H₂O₂ on wild Fusarium solani spores in distilled and natural well water" by C. Sichel et al., Water Research 43 (2009), pg. 1841 - 1850.

The UV dose [J/m²], i.e. the UV radiation dose is defined as the UV irradiance or radiant emittance [W/m²] per time unit [s]. The UV irradiance, on its turn, is the power [W] of ultraviolet radiation per unit area [m²]. Hence, the UV radiation dose can be adjusted by changing the UV irradiance of the UV source or varying the time, in which the contaminated water is exposed to UV radiation.

The synergetic effect means, that when UV radiation and hydrogen peroxide are applied simultaneously, the efficiency of the disinfection process is many times higher than when both disinfection approaches are applied separately. Hence, the disinfection process that takes place in the apparatus requires a much lower UV dose than in an advanced oxidation process, in particular more than 10 times less energy is needed compared to AOP.

The synergy of UV radiation and hydrogen peroxide leads to improved killing of harmful microorganisms like bacteria and fungi, thus many UV resistant microorganisms can be rendered innocuous. When the reaction time for disinfection of contaminated water, i.e. the time in which the amount of water containing hydrogen peroxide is exposed to UV radiation, is known and preset, the UV doses can be set lower than 400 J/m², in particular lower than 350 J/m² by adjusting the UV irradiance.

The UV irradiance is essential not only for calculating and setting a desired UV radiation dose, but also for adjusting the quantity of hydrogen peroxide used for the disinfection process, since this quantity or concentration is correlated to the UV radiation dose. Therefore, in a preferred embodiment the concentration of hydrogen peroxide is regulated depending on the UV radiation dose or the UV irradiance.

According to a further prefer embodiment the concentration of hydrogen peroxide varies between 0,1ppm and 100ppm, in particular between 0,1ppm and 50ppm. When the UV dose is relatively high, i.e. the UV dose is around 350 J/m² or higher, a low concentration of hydrogen peroxide, in particular concentration lower than 50ppm, in particular lower than 10ppm, is sufficient to achieve the lethal effect upon the microorganisms in water. On the other hand when the UV dose is kept as low as possible, in particular lower than 350 J/m², a higher quantity of hydrogen peroxide, in particular higher than 10ppm, in particular higher than 50ppm, is necessary in the contaminated water for disinfection purposes.

The concentration of hydrogen peroxide and the quantity of hydrogen peroxide are correlated, since the concentration of hydrogen peroxide is the quantity of hydrogen peroxide dissolved in a definite amount of water. At the same time the quantity is defined as the amount of hydrogen peroxide mingled with water and exposed to UV radiation, i.e. the quantity of hydrogen peroxide is the absolute amount of hydrogen peroxide in the reactor chamber for a given point of time or the time-averaged amount of hydrogen peroxide for a period of time. Therefore, in the following text the terms "quantity" and "concentration" of hydrogen peroxide are used as synonyms.

According to a preferred embodiment the UV irradiance in the reactor chamber is measured. At least one, preferably two or more UV sensors supply the control system with exact information about the current value of the UV irradiance in the reactor chamber, thus the required concentration of hydrogen peroxide with regard to optimal disinfection conditions is calculated precisely and used for a real-time control of the disinfection process. In order to achieve a desired flow rate of disinfected water, in a preferred embodiment the UV irradiance is of the UV source is adjusted depending on the reaction time so as to apply a UV radiation dose lower than the standard. At the same time an adequate concentration of hydrogen peroxide is set in the reactor chamber so as to disinfect contaminated water efficiently without raising the UV radiation dose above 400 J/m², in particular above 350 J/m².

Hydrogen peroxide is injected in the amount of water to be treated either in the reactor chamber or before the water flow has reached the reactor chamber. With respect to better mixing of hydrogen peroxide and water mixing devices can be installed in the disinfection apparatus, in particular in the reactor chamber. In order to obtain good mixing of water and hydrogen peroxide without the use of mixing devices or in order to reduce the number of mixing devices in the reactor chamber, according to one another preferred embodiment the dosage device is mounted on the feed line, so that hydrogen peroxide is injected into the amount of water preferably before exposing the amount of water to UV radiation, i.e. in particular before feeding the amount of water into the reactor chamber.

In a preferred embodiment the quantity of hydrogen peroxide is controlled by regulating the injection rate of hydrogen peroxide. This is achieved by controlling an injection rate of the dosage device by means of the control system. Thus, the concentration of hydrogen peroxide can be adapted to the current UV irradiance of the UV radiation when keeping the UV dose as low as possible.

According to another preferred embodiment the amount of water in the reactor chamber is radiated by ultraviolet radiation in at least the UV-A, the UV-B or the UV-C spectral sub-range, i.e. the UV source emits ultraviolet radiation having a wave length between 200nm and 400nm. The UV source emits in the UV-A (315nm to 400 nm), UV-B (280nm to 315nm) and/or UV-C (200nm to 280nm) spectral sub-range. The UV irradiance of the UV radiation can span over all three spectral sub-ranges, alternatively the UV source can emit only in two (e.g. UV-A and UV-B) or even in just one spectral sub-range. The UV radiation source can be an "artificial" source like an ultraviolet lamp. On the other hand the radiation source can be also sunlight going through the reactor chamber walls.

The combination of low UV irradiance and low hydrogen peroxide concentration allows the application of cost-saving materials for the construction of the reactor chamber. While conventional UV-disinfection reactors are made of high quality steel or UV resistant plastic materials, in another preferred embodiment the reactor chamber is made of plastic material like PVC, PET, etc. If the UV source is sunlight, the reactor chamber is preferably made of translucent material.

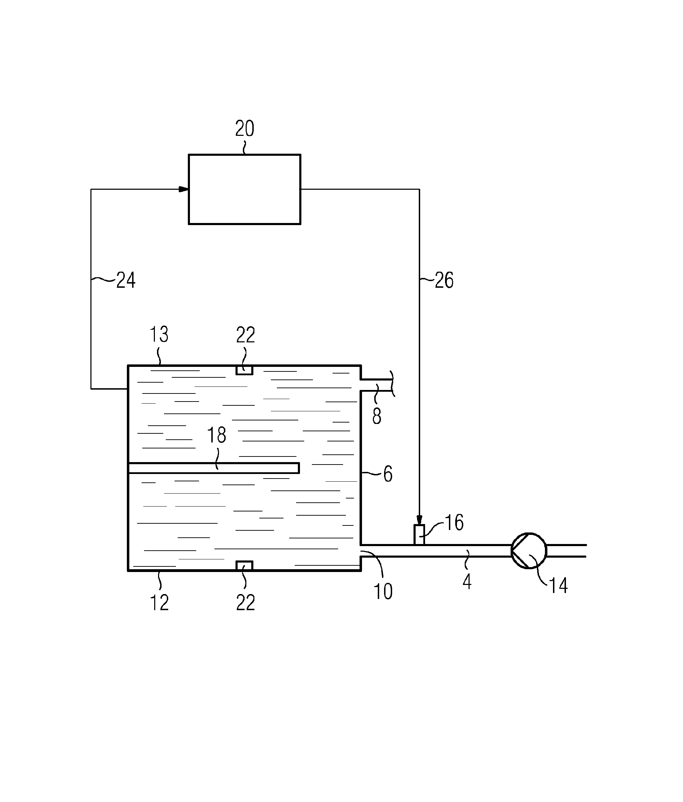

Hereinafter, a preferred exemplary embodiment of the invention is further described with reference to the accompanying drawing. In the drawing the only figure shows schematically an apparatus 2 for disinfection of contaminated water. The apparatus 2 comprises a feed line 4 for contaminated water, a reactor chamber 6 for disinfection and an outflow line 8 for disinfected water. The reactor chamber 6 is made of PVC.

Said feed line 4 has an inflow end 10 connected to a water inlet (not illustrated in the figure) of the reactor chamber 6. A water pump 14 is mounted on the feed line 4. The water pump 14 pumps contaminated water from a water source not shown in the figure along the feed line 4 in the direction of the reactor chamber 6.

A dosage device 16 for hydrogen peroxide is placed between the water pump 14 and the inflow end 10. Hydrogen peroxide is injected with the aid of the dosage device 16 into the water flow in the feed line 4, so that said hydrogen peroxide can mingle with the water flow before the water flow has reached the reactor chamber 6. Alternatively, the dosage device 16 can be mounted on or in the reactor chamber 6, so that hydrogen peroxide is injected directly in the reactor chamber 6.

A UV source 18 is placed inside the reactor chamber 6. In the preferred embodiment shown in the figure the UV source 18 is placed in the middle between a bottom 12 and a top or lid 13 of the reactor chamber 6, so that water on the bottom 12 of the reactor chamber 6 as well as water on the top of the reactor chamber 6 right underneath the lid 13 is radiated symmetrically. Alternatively, said UV source 18 can be mounted on the bottom 12 of the reactor chamber 6 or on the lid 13 covering the reactor chamber 6. The UV source can also be sunlight that passes through the walls of the reactor chamber 6. Said UV source 18 as shown in the figure emits UV radiation in UV-A, UV-B and/or UV-C spectral sub-ranges, i.e. the emitted radiation has a wave length in a range between 200nm and 400nm.

An amount of water fully filling the reactor chamber 6 is mixed with hydrogen peroxide and at the same time is exposed to UV radiation emitted by UV source 18. Due to the synergy between hydrogen peroxide and the UV radiation the disinfection effect on the microorganisms in water is enhanced and the disinfection process is highly efficient even when the UV radiation dose is lower than 40 W/m².

The regulation of the quantity of hydrogen peroxide for each point in time is done with the aid of a control system 20 controlling the disinfection process in the apparatus 2. Two UV sensors 22 are attached to the bottom 12 and the lid 13 of the reactor chamber 6 and measure the current UV irradiance in the reactor chamber 6 and processes a measurement input signal 24 to the control system 20. The measurement can be done also with the aid of just one UV sensor 22, especially when the UV source 18 is positioned on the bottom 12 or the top 13 of the reactor chamber 6 and the UV sensor 22 is positioned opposite to the UV source 18. Yet, when the UV source is in the middle of the reactor chamber 6 two UV sensors 22 attached to the bottom 12 and the lid 13 of the reactor chamber 6 cover the complete measuring zone underneath and above the UV source 18. The control system 20 evaluates the measurement input signal 24 and calculates the optimal quantity of hydrogen peroxide. The control system 20 then sets the concentration of hydrogen peroxide in correspondence to the UV dose, wherein the concentration of hydrogen peroxide is preferably between 0,1ppm and 50ppm.

The reactor chamber 6 is operated in a continuous mode, i.e. water is continuously fed in the reactor chamber 6 through the feed line 4 and at the same time the same amount of water is fed out from the bottom part of the reactor chamber 6 through the outflow line 8. In this continuous operation mode the concentration of hydrogen peroxide in the reactor chamber 6 is adjusted by changing the injection rate of hydrogen peroxide. In the embodiment according to the figure the control system 20 sends control signals 26 to the dosage device 16 and thus can regulate the hydrogen peroxide injection rate. In this case the water flow rate is preset. The water flow rate is essential for the UV doses, because the water flow rate determines the reaction time in which an amount of water is in the reactor chamber 6 and is exposed to UV radiation and the impact of hydrogen peroxide.

The apparatus 2 can also be operated in a batch mode, i.e. the reactor chamber 6 is filled with the amount of water to be treated and after the treatment the reactor chamber 6 is discharged before being filled up again with contaminated water. In this case the concentration of hydrogen peroxide can be regulated by adding more hydrogen peroxide to the amount of water in the reactor chamber (thus increasing the concentration of hydrogen peroxide in the reactor chamber 6) or by diluting the solution in the reactor chamber adding more contaminated water without admixture of hydrogen peroxide to the amount of water in the reactor rank (decreasing the concentration of hydrogen peroxide in the reactor chamber 6). The 2 can also be operated alternatively in a semi-batch mode.

The apparatus 2 according to the figure is operated in an open loop, i.e. the outflow line 8 is not connected to the feed line 4 and treated water leaving the reactor chamber 6 is not pumped through the reactor chamber 6 again. In this case a few reactors 6 can be arranged in series so that the output of the first reactor chamber is the input of the second reactor chamber and so on. The default value for the UV radiation dose then refers to the complete system of reactors. Alternatively, the apparatus 2 can be designed as a closed loop in which at least part of the output of the reactor chamber 6 is fed back into the reactor chamber 6 through the feed line 4 or through another line not shown in the figure. The reaction time which is important for the definition of the UV radiation dose is then the sum of the total residence time for a given volume of water in the reactor chamber 6.

The relation between the UV irradiance and the reaction time is used on the one hand for the determination of the UV radiation dose which is kept under the standard dose of 400 J/m² by adjusting the UV irradiance of the UV source 18. The UV radiation dose, in its turn, is used to adjust an optimal concentration of hydrogen peroxide, applying the reciprocally proportionality between the UV radiation dose and the concentration of hydrogen peroxide: when the UV radiation dose is lowered the concentration of hydrogen peroxide should be increased in order to keep the disinfection effect on microorganisms in water and vice versa. The parameters UV irradiance and concentration of hydrogen peroxide are chosen so as to keep the UV radiation dose always below 400 W/m², in particular around 350 W/m² and to use the synergy effect between UV radiation and hydrogen peroxide for an efficient disinfection of water at this low value for the UV radiation dose.

## Claims

1. A method for disinfection of water in a reactor chamber (6), having the steps of exposing an amount of water to be treated to a UV source (18) **characterized by** a given UV irradiance and introducing hydrogen peroxide into the amount of water to be treated, **characterized in that** the amount of water is disinfected by applying a UV radiation dose lower than 400 J/m², in particular lower than 350 J/m².

2. A method according to claim 1,
**characterized in that** the concentration of hydrogen peroxide is regulated depending on the UV radiation dose or the UV irradiance.

3. A method according to claim 1 or 2,
**characterized in that** the concentration of hydrogen peroxide is between 0,1ppm and 100ppm, in particular between 0,1ppm and 50ppm.

4. A method according to one of the preceding claims, **characterized in that** the UV irradiance of the UV source (18) is adjusted depending on the reaction time in which the amount of water containing hydrogen peroxide is exposed to UV radiation.

5. A method according to one of the preceding claims, **characterized in that** hydrogen peroxide is introduced to the amount of water before exposing the amount of water to UV radiation, in particular before feeding the amount of water into the reactor chamber (6).

6. A method according to one of the preceding claims, **characterized in that** the concentration of hydrogen peroxide is controlled by regulating an injection rate of hydrogen peroxide.

7. A method according to one of the preceding claims, **characterized in that** the amount of water is radiated by UV radiation in at least the UV-A, the UV-B or the UV-C spectral sub-range.

8. An apparatus (2) for disinfection of water comprising:
- a reactor chamber (6) for an amount of water to be treated,
- a feed line (4) for water, said feed line (4) having a inflow end (10) connected to the reactor chamber (6),
- an UV source (18) emitting ultraviolet radiation **characterized by** a given UV irradiance,
- a dosage device (16) for introducing hydrogen peroxide into the amount of water, and
- a control system (20) controlling the UV dose in the reactor chamber (6) so as to keep it lower than 400 J/m², in particular lower than 350 J/m².

9. An apparatus (2) according to claim 9, further comprising an UV sensor (22) for measuring the UV irradiance of said UV source.

10. An apparatus (2) according to one of the claims 9 or 10, **characterized in that** the dosage device (16) is mounted on the feed line (4).

11. An apparatus (2) according to claim 11,
**characterized in that** the control system (10) controls the UV irradiance of the UV source (18) depending on the reaction time in which the amount of water containing hydrogen peroxide is exposed to UV radiation.

12. An apparatus (2) according to one of the claims 9 to 13, **characterized in that** said control system (20) controls an injection rate of the dosage device (16).

13. An apparatus (2) according to one of the claims 9 to 14, **characterized in that** the reactor chamber (6) is made of plastic material.

14. An apparatus (2) according to one of the claims 9 to 15, **characterized in that** the reactor chamber (6) is made of translucent material.

15. An apparatus (2) according to one of the claims 9 to 12, **characterized in that** the UV source (18) emits ultraviolet radiation in at least the UV-A, the UV-B or the UV-C spectral sub-range.
